# EUROPÄISCHE PATENTANMELDUNG

(11) **EP 2 333 920 A1**
(43) Veröffentlichungstag der Anmeldung: **15.06.2011**
(21) Anmeldenummer: 10193513.8
(22) Anmeldetag: 02.12.2010
(51) Int. Cl.: H02G 3/00

(54) **Halter- und Positioniervorrichtung für den Einbau von elektrischen Steck- und/oder Verteilerdosen**

(30) Priorität: 11.12.2009 IT BZ20090055
(71) Anmelder: Skudelny, Kai, 39057 Applano (IT); Di Bari, Bernardo, 20032 Cormano (IT)
(72) Erfinder: Skudelny, Kai, 39057 Applano (IT); Di Bari, Bernardo, 20032 Cormano (IT)
(74) Vertreter: Ausserer, Anton

(57) **Zusammenfassung**

Halter- und Positioniervorrichtung für den Einbau von elektrischen Steck- und/oder Verteilerdosen, **dadurch gekennzeichnet, dass** sie eine Tragebene (3), ein in Schließrichtung belastetes und zum Ergreifen eines Randes der Dose vorgesehenes Spannmittel (5), eine horizontale Wasserwaage und eine vertikale Wasserwaage, die von der Tragebene (3) in entsprechenden Einbuchtungen (7 und 8) getragen werden, und einen Griff (8), der an der Tragebene festliegt, um die Vorrichtung (1) von Hand aus auf die Oberfläche der Wand zu bringen, wobei die Tragebene (3) über Abstandhalter zwischen dem Spannmittel und der Wand einstellbar ist.

## Beschreibung

Die vorliegenden Erfindung bezieht sich auf eine Halter- und Positioniervorrichtung für den Einbau von elektrischen Steck- und/oder Verteilerdosen gemäß dem Oberbegriff des Anspruchs 1.

Beim Einbau von derartigen Dosen stellt sich das Problem, den Außenrand der Dosen flächenbündig mit der entsprechenden Einbauwand in dieser zu positionieren. Es handelt sich nämlich darum, die Dose in eine Stellung zu bringen und sie in dieser zu halten, bis die entsprechenden Befestigungsarbeiten beendet sind. Für das Positionieren der Dosen wurden bis jetzt entweder diese Arbeiten freihändig durchgeführt, indem die Dose mit einer Hand gehalten und mit der anderen Hand gearbeitet wurde, um die Befestigungsarbeiten durchzuführen. So wurde die Stellung der Dose selbst gleichläufig gefühlsmäßig gewählt, indem sowohl versucht wurde, die Dose flächenbündig mit der Außenwand zu bringen als auch indem der Außenrand der Dose in eine derartige Stellung gebracht wurde, dass einer Dicke Rechnung getragen wurde, die für den Auftrag des Verputzes auf der Wand selbst erforderlich ist.

Um dieses Problem zu lösen, wurde beim Stand der Technik eine Vorrichtung vorgeschlagen, die innerhalb der Dose zum Eingriff kam und mit Laserrichteinrichtungen versuchte man, die Stellung des Außenrandes der Dose gegenüber dem Einbaurand der Wand zu erfassen. Eine derartige Vorrichtung ist jedoch verhältnismäßig aufwändig in ihrer Ausführung.

In der Patentschrift DE 696 409 (D1) wird eine Hilfseinrichtung zum bündigen Einputzen von Unterputzdosen mittels einer Anlegeplatte beschrieben. Diese Hilfseinrichtung weist eine Anlegeplatte auf, die mit Spreizhebeln für das Ergreifen und Einsetzen einer Unterputzdose und mit einer Wasserwaage zum Ausrichten der Anlegeplatte gegenüber der Wand versehen ist.

Eine solche Hilfseinrichtung erlaubt nur ein senkrechtes Einsetzen der Dose. Eine Ausrichtung der Dose um eine waagrechte Achse ist jedoch nicht kontrollierbar. Auch eine genaue Einstellung der Tiefe der Dose ist nicht möglich.

Die im deutschen Gebrauchsmuster DE 94 18 631 (D2)beschriebene Vorrichtung besteht aus eine Hauptträger und mindestens einer an diesem angeordneten Dosenaufnahme, die stufenlos einstellbar ist. Alternativ kann der Hauptträger an den beiden Enden je eine stufenlos verstellbare Druckplatte besitzen. Der Raum zwischen Kernloch und Dose wird vorzugsweise mit Montageschaum ausgeschäumt.

In diesem Fall ist für den Hauptträger keine Kontrolle für dessen Bündigkeit mit der Wand und für die Ausrichtung in vertikaler und horizontaler Richtung gegeben.

In der Veröffentlichung WO 2005/083860 A1 (D3)wird eine Vorrichtung beschrieben, die einen länglichen Hauptkörper mit einem Griff, mindestens eine feste Greifbacke, eine längs des Hauptkörpers bewegliche Greifbacke und Mittel für die Verstellung der beweglichen Greifbacke gegenüber dem Hauptkörper umfasst, wobei die bewegliche und feste Greifbacke eine Klammer zur Halterung der Dose beim Einbau in der Einbuchtung bildet.

Diese Vorrichtung betrifft nur die Klemmung der Dose am Hauptkörper durch eine
Linearverschiebung einer beweglichen Backe. Mittel zur Ausrichtung der ergriffenen Dose sind nicht vorgesehen.

Die aus der DE 27 32 434 (D4) bekannte Vorrichtung zum Ausrichten von Kombi-Unterputz-Gerätedosen für die Elektroinstallation beim Einsetzen in eine Wandvertiefung umfasst eine planparallele Platte mit mindestens einer sichtbaren Libelle und mindestens einer Öffnung, in die eine Unterputzdose von hinten so einsetzbar ist, dass der vordere Rand der Dose parallel zur hinteren Plattenfläche und in definiertem Abstand zu diesem liegt.

Eine derartige Vorrichtung erlaubt nur die Ausrichtung einer Dose um eine horizontale Achse, um in eine Position gebracht zu werden, in der die Dose mit ihren Seitenöffnungen mit Leitungen ausgerichtet werden kann.

Das US-Patent Nr. 5,507,098 (D5) beschreibt hingegen einen Körper mit einem ersten an demselben starr befestigten Arm zum Ergreifen einer ersten Oberfläche einer Öffnung in einer Dosenabdeckung, einem zweiten, am Körper gleitend angebrachten Arm zum Ergreifen einer zweiten Oberfläche der Öffnung, Federmittel, die zwischen dem ersten und zweiten Arm geschalten, um den zweiten Arm vom ersten Arm weg vorzuspannen, um zu ermöglichen, dass der erste und der zweite Arm die erste und die zweite Oberfläche der Öffnung mit Sicherheit ergreifen und Höheneinstellmittel am Körper, um die Höhenstellung der Abdeckung festzulegen.

Dieser Körper ist für eine Positionierung einer Dose unter Putz nicht geeignet, und für jede Abdeckung ein Körper erforderlich ist.

In der DE-OS 26 43 311 (D6) wird schließlich ein Elektroinstallations-Dosensatz beschrieben, bestehend aus einem Haltergriff, an dessen Unterseite eine Doppelspannvorrichtung angebracht ist. Dieses Gerät erlaubt keine Einstellung der Dose gegenüber der Tiefe der Wandvertiefung.

Allen diesen Geräten ist gemeinsam, dass die Dosenspannung durch Eingreifen von Spannmitteln innerhalb der Dose erreicht wird.

Die Aufgabe der vorliegenden Erfindung ist daher die Vermeidung der Montageprobleme von elektrischen Steck- und/oder Verteilerdosen beim Einbau und der Vorschlag einer Vorrichtung, die in ihrer Ausführung gegenüber den Halter- und Positioniervorrichtungen herkömmlicher Art in drei Montagerichtungen gleichzeitig möglich und einfacher ist.

Diese Aufgabe wird durch eine Halter- und Positioniervorrichtung für den Einbau von elektrischen Steck- und/oder Verteilerdosen gemäß dem kennzeichnenden Teil des Anspruchs 1 gelöst.

Indem ein Spannmittel eines der Ränder der zu montierenden Dose vorgeschlagen wird, kann diese positioniert werden, indem sie in einwandfreie Steck- und Verteilerposition verschwenkt werden kann. Diese Position kann sowohl horizontal als auch vertikal über zueinander senkrechten Wasserwaagen kontrolliert werden. Die Auflage selbst der Vorrichtung auf der Wand kann über Abstandsbolzen eingestellt werden, die bevorzugter Weise an bestimmten Abständen getragen werden, um die Auflagefläche ihrerseits auf diskrete Abstände gegenüber der Mauer zu bringen. Diese Abstände entsprechen den vorzusehenden Dicken des Verputzes. Weitere Merkmale und Einzelheiten gehen aus den Ansprüchen und aus der Beschreibung eines in der beigefügten Zeichnung dargestellten Ausführungsbeispieles hervor. Es zeigen,

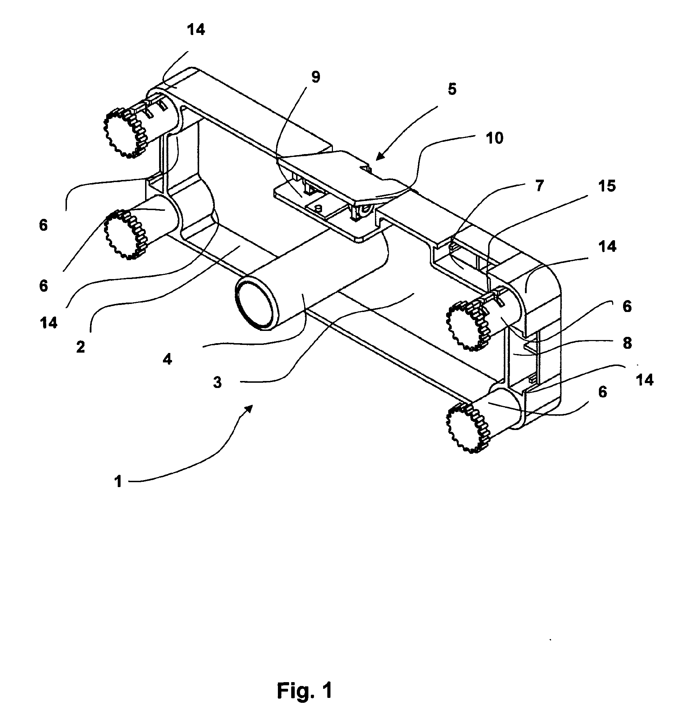

Figur 1 eine schaubildliche Seitenansicht vom Bolzen aus gesehen einer Halter- und Positioniervorrichtung für den Einbau von elektrischen Steck- und/oder Verteilerdosen gemäß der Erfindung,

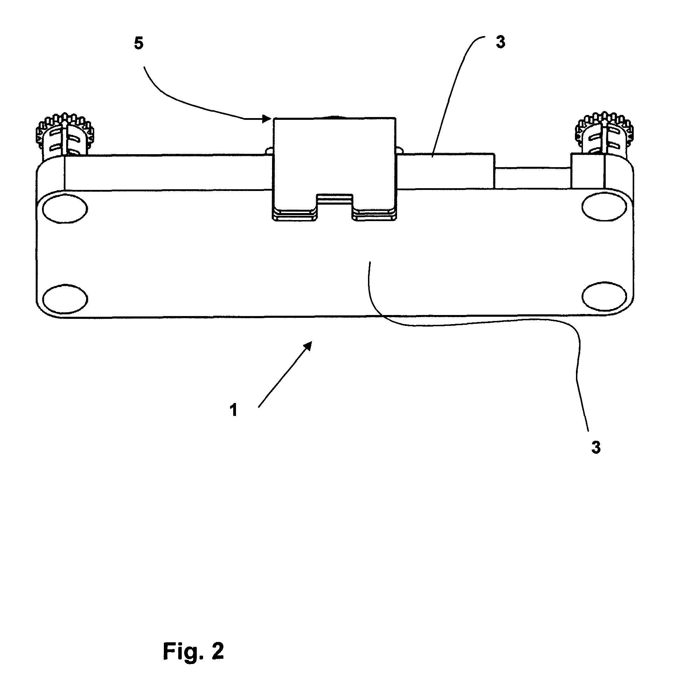

Figur 2 ein Schaubild von der Seite der Anwendung der Vorrichtung selbst von der Seite der Mauer gesehen,

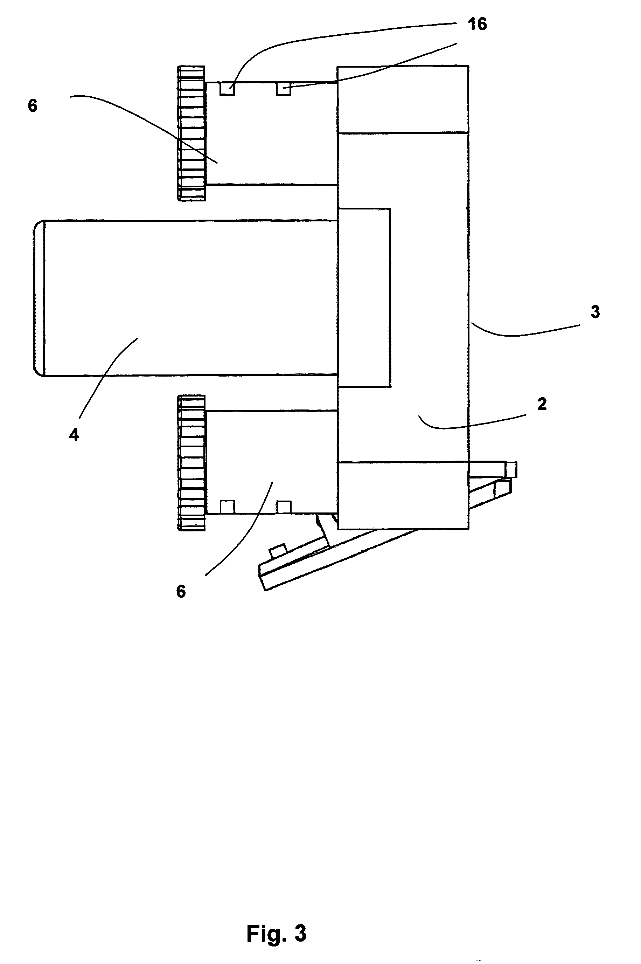

Figur 3 eine Seitenansicht, und

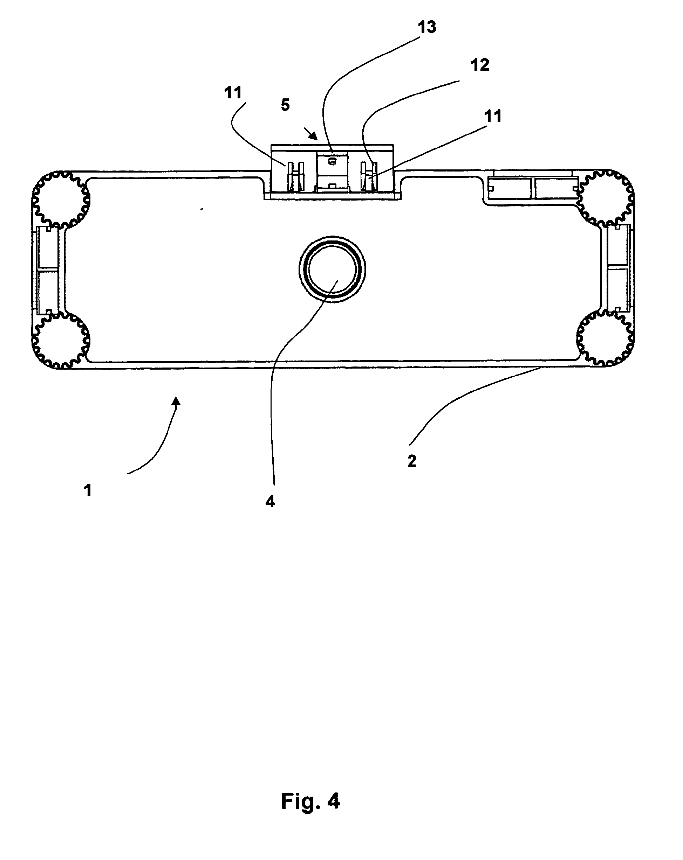

Figur 4 eine Vorderansicht der Vorrichtung aus Figur 1.

Wie in den Figuren gezeigt, ist mit der Bezugsziffer 1 in ihrer Gesamtheit eine Halter- und Positioniervorrichtung für den Einbau von elektrischen Steck- und/oder Verteilerdosen gemäß der Erfindung angegeben.

Die Vorrichtung 1 besteht aus einem Rahmen 2, der eine Tragfläche 3 aufweist. An dieser ist senkrecht ein Griff 4 befestigt, der vom Benutzer von der Seite aus anzufassen ist, die gegenüber der zu montierenden Steckdose abgewandt ist.

Im Bereich einer der Ränder, im vorliegenden Fall des oberen Randes in der Tragebene 3 ist ein Spannmittel 5 vorgesehen, um den Rand einer zu montierenden Dose zu klemmen. In der Tragebene sind überdies vier Bolzen im Bereich von Vierecken der Tragebenen 3 aufgenommen. An einem der Seiten der Tragebene 3, im vorliegenden Fall auf der Oberseite ist eine Einbuchtung 7 vorgesehen, um eine nicht gezeigte Wasserwaage aufzunehmen, während im Bereich eines zu dieser letzteren Seite senkrechten Seite eine Einbuchtung 8 vorgesehen ist, um eine Wasserwaage aufzunehmen, die zur Wasserwaage der Einbuchtung 7 senkrecht ist. Somit kann sowohl die horizontale als auch die vertikale Lage der erfindungsgemäßen Vorrichtung kontrolliert werden.

Das Spannmittel 5 wird durch eine Backe einer festliegenden Klemme 9, die am oberen Rand der Tragebene 3 festliegt, und aus einer Backe einer beweglichen Klemme 10 auf einem Schenkel 11, indem sie über eine Anlenkung 12 verschwenkbar angeordnet ist. Die Backe der beweglichen Klemme 10 wird durch eine Feder 13 belastet, um elastisch auf der Backe der festen Klemme 9 vorspringend belastet zu werden, die über den Rand der Tragebene 3 vorragt, um den Rand einer nicht gezeigten Steckdose zu ergreifen.

Die Bolzen 6 sind in Aufnahmen 14 aufgenommen, die zur Tragebene 3 senkrecht sind. Die Bolzen 6 weisen in Achsrichtung Spalten 15 auf, die mit Umgangsspalten 16 kommunizieren, in denen mindestens zwei vorgesehen sind, um die Bolzen mit einem Dorn in Eingriff zu bringen, der senkrecht zur Achse der Bolzen von der Aufnahme 14 in die Spalten vorspringt, um ihn in einen der Umfangsspalten 16 zu bringen, wobei somit der Abstand eines Bolzens 6 von der Tragebene 3 und somit die Dicke des auf die Mauer anzubringenden Verputzes festzulegen.

## Patentansprüche

1. Halter- und Positioniervorrichtung für den Einbau von elektrischen Steck- und/oder Verteilerdosen, **dadurch gekennzeichnet, dass** sie eine Tragebene (3), ein in Schließrichtung belastetes und zum Ergreifen eines Randes der Dose vorgesehenes Spannmittel (5), eine horizontale Wasserwaage und eine vertikale Wasserwaage, die von der Tragebene (3) in entsprechenden Einbuchtungen (7 und 8) getragen werden, und einen Griff (8), der an der Tragebene festliegt, um die Vorrichtung (1) von Hand aus auf die Oberfläche der Wand zu bringen, wobei die Tragebene (3) über Abstandhalter zwischen dem Spannmittel und der Wand einstellbar ist.

2. Vorrichtung nach Anspruch 1, **dadurch gekennzeichnet, dass** die Tragebene (3) über Abstandhalter zwischen Spannmittel und Wand einstellbar ist.

3. Vorrichtung nach Anspruch 2, **dadurch gekennzeichnet, dass** die Abstandhalter vier Bolzen (4) im Bereich von Vierecken der Tragebene (3) sind.

4. Vorrichtung nach Anspruch 1, **dadurch gekennzeichnet, dass** auf einer der Seiten der Tragebenen (3) eine Einbuchtung (7) vorgesehen ist, die eine Wasserwaage aufnimmt, während im Bereich einer zu dieser letzteren Seite senkrechten Seite eine Einbuchtung (3) vorgesehen ist, die eine Wasserwaage aufnimmt, die zur Wasserwaage der ersten Einbuchtung (7) senkrecht ist.

5. Vorrichtung nach Anspruch 1, **dadurch gekennzeichnet, dass** das Spannmittel (5) durch eine am oberen Rand der Tragebene (3) festliegende festen Klemmbacke (9) und durch eine bewegliche Klemmbacke (10) auf einem Schenkel (11) gebildet wird, auf welchem sie über eine Anlenkung (12) verschwenkbar angeordnet ist, wobei die bewegliche Klemmbacke (10) durch eine Feder (13) belastet ist, um auf der Klemmbacke (9) vorstehend elastisch geschlossen zu werden, die über den Rand der Tragebene (3) vorspringt, um den Rand einer Steckdose ergreifen zu können.

6. Vorrichtung nach Anspruch 3, **dadurch gekennzeichnet, dass** die Bolzen (6) in Aufnahmen (14) aufgenommen sind, die zur Tragebene (3) senkrecht sind und Spalten (15) in Achsrichtung aufweisen, die mit Umfangsspalten (16) kommunizieren, von denen mindestens zwei vorgesehen sind, um die Bolzen mit einem Dorn in Eingriff zu bringen, der senkrecht zur Achse der Bolzen aus der Aufnahme (14) in die Spalten vorspringen, um ihn in einen der Umfangsspalten (16) zu bringen, wobei so der Abstand eines Bolzens (6) von der Tragebene (3) und somit die auf der Mauer aufzubringende Dicke des Verputzes festzulegen.
